# EUROPÄISCHE PATENTSCHRIFT

(11) **EP 3 408 608 B1**
(45) Veröffentlichungstag und Bekanntmachung des Hinweises auf die Patenterteilung: **06.11.2019**
(21) Anmeldenummer: 17708194.0
(22) Anmeldetag: 22.02.2017
(51) Int. Cl.: G01J 1/02, G01S 17/08, G01S 7/497, G01B 11/02, G01S 7/481, G01S 17/02

(54) **OPTOELEKTRONISCHE VORRICHTUNG**
OPTOELECTRONIC DEVICE
DISPOSITIF OPTO-ELECTRONIQUE

(30) Priorität: 23.02.2016 DE 102016103144
(43) Veröffentlichungstag der Anmeldung: 05.12.2018
(73) Patentinhaber: Vishay Semiconductor GmbH, 74072 Heilbronn (DE)
(72) Erfinder: BURGER, Daniel, 74211 Leingarten (DE); KUHN, Sascha, 74229 Oedheim (DE); MÜHLECK, Peter, 74254 Offenau (DE)
(74) Vertreter: Manitz Finsterwald Patent- und Rechtsanwaltspartnerschaft mbB
(86) Internationale Anmeldenummer: PCT/EP2017/054078
(87) Internationale Veröffentlichungsnummer: WO 2017/144540

(56) Entgegenhaltungen:
- US-A1- 2011 121 182
- US-A1- 2011 248 151
- US-A1- 2013 049 641
- LEE S ET AL: "IMPLEMENTATION AND EVALUATION OF HEXEYE: A DISTRIBUTED OPTICAL PROXIMITY SENSOR SYSTEM", PROCEEDINGS OF THE INTERNATIONAL CONFERENCE ON ROBOTICS AND AUTOMATION. NAGOYA,JAPAN, MAY 21 - 27, 1995; [PROCEEDINGS OF THE INTERNATIONAL CONFERENCE ON ROBOTICS AND AUTOMATION], NEW YORK, IEEE, US, 21. Mai 1995 (1995-05-21), Seiten 2353-2360, XP000731589, ISBN: 978-0-7803-1966-0

## Beschreibung

Die vorliegende Erfindung betrifft eine optoelektronische Vorrichtung mit wenigstens einem optoelektronischen Sender und wenigstens einem optoelektronischen Empfänger. Der optoelektronische Sender und der optoelektronische Empfänger können beispielsweise auf einer Trägereinrichtung der optoelektronischen Vorrichtung installiert sein.

Oberhalb der Trägereinrichtung, d.h. bezüglich einer Vertikalrichtung oberhalb des optoelektronischen Senders und/oder Empfängers, kann ein Linsenelement vorgesehen sein, welches wenigstens einen Linsenabschnitt für den optoelektronischen Sender und/oder optoelektronischen Empfänger aufweist. Hierfür kann der jeweilige Linsenabschnitt strahlformende und/oder strahlumlenkende Eigenschaften aufweisen.

Derartige optoelektronische Vorrichtungen sind insbesondere als optoelektronische Sensorvorrichtungen ausgebildet, um Eigenschaften von Objekten optisch abtasten und elektronisch erfassen zu können. Ein Anwendungsfall für solche Sensorvorrichtungen liegt im Bereich von kommerziell erhältlichen Druckergeräten, d.h. Vorrichtungen zum computergestützten Bedrucken von Papier mittels bekannter Drucktechnologien, z.B. der Laserdruck- oder Tintenstrahldrucktechnologie. Um einen möglichst vollautomatischen und benutzerfreundlichen Betrieb eines Druckers (oder eines einen Drucker umfassenden Multifunktionsgeräts) zu ermöglichen, müssen verschiedene Betriebsparameter des Druckers, wie etwa eine Menge oder ein Typ des in ein Aufnahmefach des Druckers eingelegten Papiers, ein vorgesehenes Papierformat, die relative Position einer Papierkante und dergleichen ermittelt und gegebenenfalls überwacht werden. Ferner besteht Bedarf an einer automatischen Analyse eines jeweiligen Druckergebnisses oder eines zu scannenden Papiers, um z.B. den Inhaltstyp (Bild vs. Text) des zu scannenden Papiers oder die korrekte Konfigurierung (z.B. mechanische Ausrichtung einer Druckeinheit des Druckers) anhand eines Druckergebnisses zu überprüfen.

Typischerweise ist für jeden zu messenden Betriebsparameter eine angepasste optoelektronische Vorrichtung vorgesehen, welche dazu ausgebildet ist, ein emittiertes optisches Signal mit einem detektierten, z.B. reflektierten optischen Signal zu vergleichen, um aus der Differenz dieser optischen Signale den betreffenden Betriebsparameter bestimmen können. Bei den optischen Signalen handelt es sich im Allgemeinen um elektromagnetische Strahlung einer sichtbaren oder unsichtbaren Wellenlänge, insbesondere Infrarot. Häufig umfasst die Vorrichtung sowohl einen optoelektronischen Sender als auch einen optoelektronischen Empfänger. So kann die Vorrichtung beispielsweise als Näherungssensor fungieren. Es sind aber auch Varianten möglich, in denen eine optoelektronische Vorrichtung mehrere Sender und Empfänger aufweist, wobei eine Vorrichtung z.B. mehrere Betriebsparameter insbesondere zeitgleich bestimmen kann (z.B. mit einer Unterscheidung zwischen diffuser und spiegelnder Reflexion). Ein jeweiliges Empfangssignal des optoelektronischen Empfängers kann - ggf. nach einer Verarbeitung, wie beispielsweise einer Analog-zu-Digital-Wandlung - als Ausgabesignal der optoelektronischen Vorrichtung ausgegeben werden.

Ein Problem derartiger optoelektronischer Vorrichtungen besteht regelmäßig darin, dass eine fehlerfreie und präzise Funktionsweise einer solchen Vorrichtung nicht unter allen Umständen, z.B. nicht in jedem Anwendungsfall, gleichermaßen garantiert werden kann. Ein Grund hierfür liegt insbesondere in herstellungsbedingten Toleranzen derjenigen Bauteile, die einer betreffenden optoelektronischen Vorrichtung zugrunde liegen. Dies betrifft einerseits die mechanischen Komponenten der Vorrichtung, wie beispielsweise ein Linsenelement oder ein Aperturelement. Andererseits können auch elektronische Bauteile der Vorrichtung, insbesondere der optoelektronische Sender und der optoelektronische Empfänger, von einer erwünschten Spezifikation abweichen. Ob eine Abweichung von der Spezifikation tatsächlich zu einer Fehlfunktion der optoelektronischen Vorrichtung führt, ist im Allgemeinen nicht vorhersagbar, da eine Fehlfunktion von der Art und der Ausprägung der Abweichung einerseits und von dem Anwendungsfall der optotelektronischen Vorrichtung andererseits abhängt. Beispielsweise kann sich eine Abweichung erst bei einer Anwendung der Vorrichtung zur Detektion vergleichsweise weit entfernter Objekte (z.B. größer 10 cm) auswirken und erst dann zu einer unzuverlässigen oder völlig fehlerhaften Funktion der Vorrichtung führen. Nahe Objekte können hingegen problemlos detektiert werden. Die Funktionsweise der Vorrichtung kann im Rahmen einer konkreten Anwendung insbesondere auch durch die Messumgebung der Vorrichtung beeinflusst werden. Ferner ist es im Einzelfall nicht vorhersagbar, ob und, wenn ja, wie sich Spezifikationsabweichungen gegenseitig beeinflussen. So kann regelmäßig nicht von einer linearen Überlagerung einzelner Abweichungen ausgegangen werden. Vielmehr sind gravierende, z.B. nichtlineare Effekte möglich, die sich aus einer Mehrzahl lediglich geringfügiger Abweichungen ergeben.

Durch die oben geschilderte Problematik müssen Teile der Vorrichtung, die in einem gewissen Maße von ihrer Spezifikation abweichen, oder die gesamte Vorrichtung regelmäßig als Ausschuss verworfen werden. Da Abweichungen von der Spezifikation zumindest im Rahmen einer massenindustriellen Herstellungsweise der Vorrichtung jedoch grundsätzlich nicht vollständig vermieden werden können, muss herkömmlicherweise stets ein gewisses Risiko einer Fehlfunktion oder einer begrenzten Präzision der Vorrichtung in Kauf genommen werden. Ob ein oder mehrere Teile einer optoelektronischen Vorrichtung tatsächlich verworfen werden müssen, kann freilich im Rahmen eines insbesondere anwendungsspezifischen Testzyklus überprüft werden. Hierdurch geht jedoch die universelle Anwendbarkeit der Vorrichtung verloren, da die Vorrichtung unter vertretbarem Aufwand allenfalls für wenige Anwendungen überprüft werden kann. Problematisch ist auch, dass sich die Rahmenbedingungen eines Testzyklus, welche bei einer neu hergestellten Vorrichtung noch im Wesentlichen zutreffen mögen, im Laufe des Praxisbetriebs ändern und somit die Funktionsweise der Vorrichtung in nicht vorhersagbarer beeinträchtigen können. Im Falle einer Anwendung der Vorrichtung in einem Drucker können sich beispielsweise im Laufe der Zeit Aerosole, Papierstaub und dergleichen an der Vorrichtung ansammeln und somit die optischen Eigenschaften der Vorrichtung signifikant verändern.

US 2013/049641 A1 offenbart eine Vorrichtung mit Merkmalen des Oberbegriffs des Anspruchs 1. Weitere ähnliche Vorrichtungen sind in US 2011/248151 A1, US 2011/121182 A1 sowie in dem Artikel von Lee et al: "Implementation and Evaluation of Hexeye: A distributed optical proximity sensor system", Proceedings of the international conference on robotics and automation, Nagoya, Japan, May 21 -27, 1995, IEEE, offenbart.

Es ist eine Aufgabe der Erfindung, eine kostengünstige optoelektronische Sensorvorrichtung der eingangs genannten Art anzugeben, bei der eine präzise und zuverlässige Funktion gewährleistet sowie Fehlfunktionen verhindert und insbesondere nachträglich einfach korrigiert werden können. Ferner ist es eine Aufgabe der Erfindung, dass Vorrichtungen, die von einer zugrundeliegenden Spezifikation, insbesondere substantiell, abweichen, dennoch verwendet werden können, d.h. nicht verworfen werden müssen.

Die Aufgabe wird gelöst durch eine optoelektronische Sensorvorrichtung mit den Merkmalen des Anspruchs 1.

Eine optoelektronische Vorrichtung umfasst eine Speichereinrichtung mit wenigstens einem nicht-flüchtigen Speicher, der dazu angepasst ist, einen individuellen Datensatz zu speichern. Ferner ist eine Datenschnittstelle vorgesehen, die einen Zugriff auf den nicht-flüchtigen Speicher, insbesondere von außerhalb der optoelektronischen Vorrichtung, erlaubt. Die optoelektronische Sensorvorrichtung weist ferner eine anwendungsspezifische integrierte Schaltung auf, wobei die Speichereinrichtung mit der anwendungsspezifischen integrierten Schaltung verbunden oder in die anwendungsspezifische integrierte Schaltung integriert ist, wobei die anwendungsspezifische integrierte Schaltung dazu angepasst ist, Empfangssignale des optoelektronischen Empfängers zu verarbeiten und auszugeben.

Der individuelle Datensatz repräsentiert eine spektrale Empfindlichkeitscharakteristik der optoelektronischen Sensorvorrichtung, eine entfernungsabhängige Empfindlichkeitscharakteristik der optoelektronischen Sensorvorrichtung und/oder eine winkelabhängige Empfindlichkeitscharakteristik der optoelektronischen Sensorvorrichtung, wobei die anwendungsspezifische integrierte Schaltung ferner dazu angepasst ist, den individuellen Datensatz oder Teile hiervon aus dem nicht-flüchtigen Speicher auszulesen und auszugeben, und wobei die anwendungsspezifische integrierte Schaltung jedoch nicht geeignet ist, die Empfangssignale des optoelektronischen Empfängers in Abhängigkeit von dem individuellen Datensatz zu verarbeiten.

Der individuelle Datensatz kann eine Vielzahl von individuellen Daten umfassen, die sich auf die konkrete optoelektronische Vorrichtung beziehen, in deren Speichereinrichtung der betreffende Datensatz abgelegt ist. Mit anderen Worten repräsentiert der Datensatz eine bestimmte optoelektronische Vorrichtung bzw. deren spezifische Eigenschaften. Hierbei kann es sich um einen bestimmten Vorrichtungstyp handeln. Der individuelle Datensatz kann sich aber auch ausschließlich auf ein bestimmtes Exemplar eines Vorrichtungstyps beziehen. Jedenfalls ist der Datensatz nicht pauschal für viele Vorrichtungen, z.B. typunabhängig, gültig, sondern weist einen konkreten Bezug zu einer individuellen optoelektronischen Vorrichtung auf. Dem steht jedoch nicht entgegen, dass die individuellen Datensätze verschiedener optoelektronischer Vorrichtungen zumindest teilweise miteinander übereinstimmen können.

Der individuelle Datensatz kann Betriebsparameter umfassen, welche zum Betreiben der Vorrichtung relevant sind. Diese können im Rahmen eines anwendungsgemäßen Betriebs der Vorrichtung aus dem nicht-flüchtigen Speicher ausgelesen und berücksichtigt werden. Hierdurch kann insbesondere eine fehlerhafte Ansteuerung der optoelektronischen Vorrichtung vermieden werden. Beispielsweise kann durch Vorgabe eines oder mehrerer Grenzwerte, insbesondere Maximalwerte, eine Überlastung der optoelektronischen Bauelemente (Sender/Empfänger) ausgeschlossen werden. Ferner ist es denkbar, dass der individuelle Datensatz Informationen über individuelle Abweichungen der optoelektronischen Bauelemente oder sonstiger Komponenten der Vorrichtung enthält. Beispielsweise kann durch den individuellen Datensatz vorgegeben werden, dass der optoelektronische Sender mit einem vorbestimmten Offset angesteuert werden muss, um ein spezifiziertes Emissionssignal zu erzeugen. Die Zuverlässigkeit und Präzision der Vorrichtung kann somit insgesamt erhöht werden.

Unter dem Begriff "Betriebsparameter" sind nicht bloß skalare Kennwerte zu verstehen. So können insbesondere auch Betriebs- oder Arbeitsbereiche, welche mehrere Kennwerte umfassen, Betriebsparameter im Sinne der Erfindung sein. Ebenso können Kalibrierungsfaktoren der optoelektronischen Vorrichtung, welche z.B. im Rahmen eines Prüfzyklus der Vorrichtung ermittelt worden sind, Betriebsparameter sein. Der Begriff "Betriebsparameter" ist im Rahmen der Erfindung somit umfassend zu verstehen.

Der nicht-flüchtige Speicher kann beispielsweise als Flashspeicher ausgebildet sein. Die tatsächlich belegte Speichergröße kann an den Umfang des individuellen Datensatzes oder an die Umfänge zu erwartender Datensätze angepasst sein. Der nicht-flüchtige Speicher kann hierfür vergleichsweise groß sein, z.B. 128 Byte.

Somit kann der Speicher flexibel unterschiedlich große Datensätze aufnehmen, ohne dass die Speichergröße eine relevante Limitierung darstellt, die bei der Definition eines betreffenden Datensatzes unter normalen Umständen berücksichtigt werden muss. Der nicht-flüchtige Speicher ist vorzugsweise wiederbeschreibbar, d.h. mehrfach beschreibbar. Hierdurch kann der gespeicherte individuelle Datensatz auch nachträglich geändert oder angepasst werden, insbesondere erst nach einem ursprünglichen Speichern des individuellen Datensatzes durch den Hersteller und insbesondere aufgrund einer Selbstdiagnose oder durch den Anwender. Das Wiederbeschreiben des nicht-flüchtigen Speichers von außen kann insbesondere über die Datentschnittstelle erfolgen.

Über die Datenschnittstelle können der individuelle Datensatz oder Teile hiervon direkt oder indirekt aus dem nicht-flüchtigen Speicher ausgelesen werden. Dies kann zu Beginn eines Betriebs der optoelektronischen Vorrichtung oder während des laufenden Betriebs bedarfsweise, in regelmäßigen Abständen und/oder betriebsabhängig (z.B. getriggert durch ein vorbestimmtes Ereignis) erfolgen. Der individuelle Datensatz kann insbesondere eine Konfigurierung der optoelektronischen Vorrichtung ergänzen oder ersetzen. Die Datenschnittstelle kann insbesondere eine Datenbus-Schnittstelle sein, d.h. eine Schnittstelle eines Kommunikationsbusses, der vorzugsweise nach einem standardisierten Protokoll kommuniziert.

In einem beispielhaften Anwendungsfall der optoelektronischen Vorrichtung in einem Drucker können beispielsweise bei jeder Inbetriebnahme des Druckers ein Testsignal von dem optoelektronischen Sender ausgesendet und ein hiervon anhängiges Empfangssignal von dem optoelektronischen Empfänger empfangen werden. Durch Vergleich des Empgangssignals mit gespeicherten Referenzwerten können einer oder mehrere Betriebsparameter des individuellen Datensatzes an die aktuelle Messumgebung und den Zustand der Vorrichtung angepasst werden.

Wie weiter oben erwähnt kann der individuelle Datensatz eine spektrale, d.h. frequenz- bzw. wellenlängenspezifische Empfindlichkeitscharakteristik der optoelektronischen Vorrichtung repräsentieren. Die Empfindlichkeitscharakteristik bezieht sich hierbei z.B. auf die spektrale Empfindlichkeit des optoelektronischen Empfängers bezüglich eintreffender optischer Signale. Eine Empfindlichkeitscharakteristik kann zusätzlich oder alternativ auch eine Entfernungsabhängigkeit und/oder eine Winkelabhängigkeit aufweisen. Hierbei kann der individuelle Datensatz also z.B. eine Information darüber liefern, wie sich der optoelektronische Empfänger im Zuge einer Detektion unterschiedlich entfernter Objekte oder bezüglich des Einfallswinkels eintreffender optische Signale verhält.

Gemäß einer weiteren Ausführungsform umfasst der individuelle Datensatz Identifizierungsdaten zu einer Produktionshistorie der optoelektronischen Vorrichtung, wobei die Identifizierungsdaten wenigstens eine Teilenummer, wenigstens eine Chargennummer und/oder wenigstens eine Information über einen Produktionszeitpunkt umfassen.

Zusätzlich oder alternativ umfasst der individuelle Datensatz Produktionsprozessdaten zu einer Produktionshistorie der optoelektronischen Vorrichtung, wobei die Produktionsprozessdaten wenigstens eine Information über ein bei der Herstellung verwendetes Werkzeug, wenigstens eine Information über eine bei der Herstellung verwendete Prüfeinrichtung und/oder wenigstens eine Information über eine bei der Herstellung verwendete Prüf-Software umfasst. Die Produktionsprozessdaten ermöglichen eine Diagnose von Fehlfunktionen oder sonstigen Mängeln der Vorrichtung, wobei ein betreffender Mangel, insbesondere wenn dieser neu bzw. unvorhergesehen auftritt, in Abhängigkeit der Produktionsprozessdaten rückverfolgt bzw. mit einem herstellungsbedingten Grund, welcher zu dem Mangel geführt hat, in Zusammenhang gebracht werden kann. Besonders wichtig können diese Informationen auch sein, wenn im Rahmen eines Updates eine Firmware der optoelektronischen Vorrichtung und/oder bestimmte Kalibrierdaten innerhalb des individuellen Datensatzes aktualisiert werden sollen, da dann die Aktualisierung in Abhängigkeit von der individuellen Produktionshistorie der optoelektronischen Vorrichtung gewählt werden kann. Beispielsweise kann hierdurch berücksichtigt werden, dass nur die Firmware oder die Kalibrierdaten derjenigen optoelektronischen Vorrichtungen aktualisiert werden müssen, die bei der Herstellung mit einem bestimmten Werkzeug bearbeitet wurden.

Nach einer weiteren Ausführungsform umfasst der individuelle Datensatz wenigstens eine Übertragungsfunktion, wobei die Übertragungsfunktion einen Zusammenhang zwischen wenigstens einem ersten Betriebsparameter und wenigstens einem zweiten Betriebsparameter der optoelektronischen Vorrichtung beschreibt. Hierbei kann sich die Übertragungsfunktion insbesondere auf eine vorbestimmte Anwendung der optoelektronischen Vorrichtung als Sensor (z.B. zur Bestimmung einer Objektdistanz) beziehen. Bei Verwendung der gespeicherten Übertragungsfunktion ist eine anwendungsspezifische Kalibrierung der optoelektronischen Vorrichtung nicht erforderlich, insbesondere wenn die betreffende optoelektronische Vorrichtung bestimmungsgemäß, z.B. in einem Drucker, verbaut worden ist. Mit anderen Worten werden müssen die zur Kalibrierung der Vorrichtung notwendigen Daten nur einmal, insbesondere durch den Hersteller der Vorrichtung, ermittelt werden, wobei die Daten danach dem Kunden bzw. Anwender der Vorrichtung unmittelbar in dem nicht-flüchtigen Speicher zur Verfügung stehen. Der Kunde bzw. Anwender kann die Daten sodann auslesen und für eine anwendungsspezifische Anpassung der Messdaten verwenden. Die gespeicherten Daten der Übertragungsfunktion können jedoch bei Bedarf aktualisiert oder ergänzt werden.

Die Übertragungsfunktion kann insbesondere individuelle optische und/oder elektronische Eigenschaften der betreffenden Vorrichtung sowie das anwendungsspezifische Verhalten der Vorrichtung repräsentieren. Die Übertragungsfunktion kann beispielsweise die relative Intensität eines von dem optoelektronischen Empfänger empfangenen optischen Signals in Abhängigkeit von einer Distanz eines Objekts beschreiben, von dem das optische Signal ausgegangen bzw. reflektiert worden ist. Eine solche Übertragungsfunktion kann insbesondere bei einer Verwendung der optoelektronischen Vorrichtung als Distanzsensor, insbesondere als Papiermengensensor in einem Drucker, eingesetzt werden. Auf Basis einer solchen Übertragungsfunktion kann von einem Intensitätswert des Empfängers auf die Objektdistanz bzw. auf die Papiermenge geschlossen werden. Da die Übertragungsfunktion sich auf die individuelle Vorrichtung bezieht, kann die Zuordnung auch dann präzise erfolgen, wenn die Vorrichtung an sich von einer vorgegebenen Spezifikation abweicht, d.h. die gewünschte Funktionsweise der Vorrichtung ist trotzdem gewährleistet. Somit kann die Übertragungsfunktion dazu dienen, die Individualität der Vorrichtung bzw. die Variation zwischen einzelnen Vorrichtungen auf elektronischem Wege zu kompensieren, sodass die Vorrichtung unter Berücksichtigung der Übertragungsfunktion eine vorgegebene einheitliche, d.h. nichtvorrichtungsindividuelle Funktion erfüllen kann.

Es versteht sich, dass für einen jeweiligen Arbeits- oder Betriebspunkt, oder für einen Arbeits- oder Betriebsbereich der Vorrichtung eine jeweils zugeordnete Übertragungsfunktion vorgesehen sein kann. Eine Übertragungsfunktion kann also sowohl anwendungsspezifisch im Sinne einer Anwendungsart der Vorrichtung (z.B. als Papiermengensensor), als auch anwendungsspezifisch im Sinne von Betriebsbedingungen oder Betriebsmodi der Vorrichtung (z.B. Umgebungsleuchtstärke oder Objektdistanzbereich) sein. Ferner können für eine jeweilige Übertragungsfunktion bestimmte Werte von Betriebsparametern, wie z.B. ein Verstärkungsfaktor für den optoelektronischen Sender oder Empfänger, vorgegeben sein.

Der erste Betriebsparameter der Übertragungsfunktion kann insbesondere einem Verhältnis eines Empfangssignals des optoelektronischen Empfängers zu einem Emissionssignal des optoelektronischen Senders entsprechen. Der erste Betriebsparameter muss also nicht identisch zu einer unmittelbar gemessenen Größe eines optoelektronischen Bauteils sein, sondern kann eine hiervon abgeleitete Größe oder eine Kombination mehrerer gemessener Größen und/oder Betriebsparameter sein. Der erste Betriebsparameter wird vorzugsweise durch eine elektrische Spannung oder einen elektrischen Strom eines photosensitiven Elements des optoelektronischen Empfängers gemessen, wobei die gemessene Spannung oder der gemessene Strom in Relation zu einer Spannung oder eines Stroms gesetzt wird, mit der bzw. mit dem der optoelektronische Sender zum Aussenden des betreffenden Emissionssignals angesteuert wurde.

Die Übertragungsfunktion muss nicht ausschließlich einen Zusammenhang zwischen zwei Betriebsparametern beschreiben. Die Übertragungsfunktion kann auch mehr als zwei Funktionsvariablen umfassen. Sie kann beispielsweise eine Parameterfunktion sein, bei der eine zweidimensionale Übertragungsfunktion einen Zusammenhang mit einem übergeordneten Betriebsparameter aufweist (z.B. Objekttyp oder Druckertyp).

Im Rahmen einer Anwendung der optoelektronischen Vorrichtung in einem Drucker kann ein Betriebsparameter insbesondere die relative Position einer Papierkante eines in dem Drucker angeordneten Papierbogens sein. Auf Basis der relativen Intensität eines von dem optoelektronischen Empfänger empfangenen Detektionssignals kann die (korrekte) Position des Papierbogens bestimmt werden. Beispielsweise kann überwacht werden, ob eine vordere Kante des Papierbogens eine vorbestimmte Position einnimmt oder nicht. Der individuelle Datensatz kann hierzu angepasste Schaltpunkte umfassen, oder die Anpassung von Schaltpunkten an eine Übertragungsfunktion ermöglichen, wobei ein Schaltpunkt bestimmt, ab welcher Intensität des Empfangssignals angenommen wird, dass die Kante des Papierbogens die vorbestimmte Position einnimmt. Herkömmlicherweise waren solche Schaltpunkte unabhängig von der tatsächlichen Übertragungsfunktion der optoelektronischen Vorrichtung fest programmiert oder mussten unter großem Aufwand im Rahmen eines Kalibrierprozesses beim Kunden bzw. Anwender ermittelt werden.

Gemäß einer Ausführungsform weist der individuelle Datensatz zur Beschreibung der wenigstens einen Übertragungsfunktion eine Lookup Tabelle und/oder Polynomparameter zur Charakterisierung einer Polynomfunktion auf. Eine Lookup Tabelle ist eine zweidimensionale oder höherdimensionale Nachschlagetabelle, die für wenigstens einen Betriebsparameter (als Bezugswert bzw. Eingangswert) wenigstens einen Betriebsparameter (als Ausgabewert) bereithält, wobei erforderlichenfalls Zwischenwerte durch Interpolation ermittelt werden können. Eine Polynomfunktion beschreibt die Abhängigkeit eines zweiten Betriebsparameters (als Ausgabewert) von wenigstens einem ersten Betriebsparameter (als Bezugswert bzw. Eingangswert). Die Polynomparameter des individuellen Datensatzes können eine vorbestimmte Polynomfunktion charakterisieren oder eine von mehreren verschiedenen Polynomfunktionen festlegen und diese charakterisieren. Ein Vorteil der Lookup Tabelle bzw. der Polynomparameter für eine Polynomfunktion besteht in dem geringen Bedarf an Speicherplatz. Ferner sind Betriebsparameterwerte schnell verfügbar, da diese nicht eigens berechnet werden müssen oder lediglich unter geringem Aufwand berechnet werden können. Darüber hinaus ist eine nachträgliche Anpassung der Übertragungsfunktion, insbesondere wenn diese durch eine Polynomfunktion repräsentiert wird, einfach möglich, z.B. durch Anpassung eines oder mehrerer Polynomparameter.

Wie oben erwähnt weist die Vorrichtung eine anwendungsspezifische integrierte Schaltung (ASIC) auf, wobei die Speichereinrichtung mit der anwendungsspezifischen integrierten Schaltung verbunden oder in die anwendungsspezifische integrierte Schaltung integriert ist.

Die Verwendung eines ASIC bietet eine Reihe von Vorteilen. Ein Vorteil besteht darin, dass der optoelektronische Sender und Empfänger direkt von dem (lokalen) ASIC angesteuert werden können. Im Vergleich zu dem Fall einer direkten Ansteuerung von extern bzw. aus der Ferne, z.B. von einem angeschlossenen Mikrocontroller, kann hierdurch ein besseres Signal-zu-Rauschverhältnis (Signal-to-Noise Ratio, SNR) der optoelektronischen Vorrichtung erzielt werden, sodass die optoelektronische Vorrichtung effizient sowie mit hoher Präzision und Zuverlässigkeit betrieben werden kann. Der ASIC kann dennoch sehr einfach und kostengünstig aufgebaut sein. Solche ASICs sind insbesondere in großer Stückzahl günstig verfügbar.

Durch den ASIC kann die optoelektronische Vorrichtung mit einer Intelligenz ausgestattet werden, die bislang im Hinblick auf die Herstellungskosten nicht möglich war. Hierbei erweist sich der nicht-flüchtige Speicher als besonders vorteilhaft, da der ASIC über sein bloßes anwendungspezifisches Schaltungsdesign hinaus einen auf die individuelle Vorrichtung zugeschnittenen, insbesondere optimalen, Betrieb der Vorrichtung erlaubt. Die zum Auslesen des Speichers vorgesehene Datenschnittstelle ist vorzugsweise in den ASIC integriert, sodass der ASIC den Speicher intern beschreiben und auslesen kann, wobei die entsprechenden Daten z.B. über ein Busmodul des ASIC zwischen dem ASIC und einer übergeordneten externen Steuerungseinheit (z.B. einem Microcontroller) übertragen werden können. Es ist aber auch denkbar, für den Speicher eine separate Datenschnittstelle vorzusehen, sodass Daten unabhängig von dem ASIC in den Speicher geschrieben oder aus demselben ausgelesen werden können. Dies ist natürlich insbesondere auch dann der Fall, wenn kein ASIC vorgesehen ist.

Durch den ASIC kann eine Vorverarbeitung der für den optoelektronischen Sender vorgesehen Steuerungssignale erfolgen. Ferner ist eine Vorverarbeitung von durch den optoelektronischen Empfänger empfangenen optischen Signalen denkbar. Gemäß einer vorteilhaften Ausführungsform kann der ASIC hierbei auf den gespeicherten individuellen Datensatz zurückgreifen und beispielsweise individuelle Verstärkungsfaktoren berücksichtigen. Ferner ist es denkbar, dass der ASIC im Rahmen eines regelmäßigen Testzyklus und/oder in Abstimmung mit einer übergeordneten Steuerungseinheit der Vorrichtung ein Aktualisierungserfordernis des individuellen Datensatzes feststellt und dies der Steuerungseinheit mitteilt.

Wie weiter oben angedeutet kann die anwendungsspezifische integrierte Schaltung dazu angepasst sein, Empfangssignale des optoelektronischen Empfängers zu verarbeiten (z.B. zu Digitalisieren) und in der verarbeiteten Form als Ausgabesignale der optoelektronischen Vorrichtung über die Datenschnittstelle bzw. ein Busmodul auszugeben, wobei die anwendungsspezifische integrierte Schaltung ferner dazu angepasst sein kann, den individuelle Datensatz oder Teile hiervon aus dem nicht-flüchtigen Speicher auszulesen und (zusätzlich zu den verarbeiteten Empfangssignalen) über die Datenschnittstelle auszugeben. Des Weiteren ist die anwendungsspezifische integrierte Schaltung hierbei jedoch nicht geeignet, die Empfangssignale des optoelektronischen Empfängers in Abhängigkeit von dem gespeicherten individuellen Datensatz zu verarbeiten. Dieser relativ komplexe Rechenaufwand kann von einer externen Signalverarbeitungseinheit (Microcontroller) durchgeführt werden, die bei den meisten Anwendungen ohnehin vorhanden ist. Bei dieser Ausführungsform der optoelektronischen Vorrichtung kann somit ein vergleichsweise einfach aufgebauter ASIC mit geringer Verarbeitungsleistung vorgesehen werden.

Nach einer weiteren Ausführungsform umfasst die optoelektronische Vorrichtung einen Temperatursensor. Hierdurch kann die mittels des Temperatursensors gemessene Temperatur innerhalb der optoelektronischen Vorrichtung bzw. der unmittelbaren Umgebung als ein Betriebsparameter derart berücksichtigt werden, dass im Falle einer temperaturabhängigen Funktionsweise der Vorrichtung dieselbe dennoch spezifikationstreu betrieben werden kann. Beispielsweise kann eine temperaturabhängige Messabweichung unmittelbar kompensiert werden, insbesondere von einem an die Vorrichtung angeschlossenen externen Microcontroller. Das hierfür nötige Wissen kann mit dem individuellen Datensatz in dem nicht-flüchtigen Speicher der Speichereinrichtung abgespeichert und z.B. für die Steuerungseinheit bzw. den Microcontroller der Vorrichtung nach einem Auslesen des Datensatzes verfügbar sein.

Der Erfindung bezieht sich ferner auf ein Verfahren zum Herstellen einer optoelektronischen Sensorvorrichtung gemäß einer der vorstehend beschriebenen Ausführungsvarianten, wobei eine spektrale Empfindlichkeitscharakteristik, eine entfernungsabhängige Empfindlichkeitscharakteristik und/oder eine winkelabhängige Empfindlichkeitscharakteristik optoelektronische Vorrichtung ermittelt wird. Der individuelle Datensatz wird in Abhängigkeit von den Messergebnissen in den nicht-flüchtigen Speicher der Speichereinrichtung geschrieben, wobei der individuelle Datensatz die ermittelte Empfindlichkeitscharakteristik repräsentiert. Die Ermittlung bzw. Überprüfung der Empfindlichkeitscharakteristik kann insbesondere im Rahmen eines Prüfzyklus der optoelektronischen Vorrichtung bei dem Hersteller der Vorrichtung - also als Teil des Produktionsprozesses - und/oder bei einem Kunden bzw. Anwender der Vorrichtung (z.B. bei dem Hersteller eines Druckers) erfolgen.

Die optoelektronische Sensorvorrichtung kann gemäß einem Produktionsprozess hergestellt und geprüft werden, wobei in Abhängigkeit von dem Produktionsprozess ein individueller Datensatz in den nicht-flüchtigen Speicher der Speichereinrichtung geschrieben wird, der wenigstens eine Information über ein bei der Herstellung verwendetes Werkzeug, wenigstens eine Information über eine bei der Herstellung verwendete Prüfeinrichtung und/oder wenigstens eine Information über eine bei der Herstellung verwendete Prüf-Software umfasst. Die gespeicherten Daten stehen insbesondere dem Kunden bzw. Anwender der Vorrichtung unmittelbar zur Verfügung und können allgemein als "elektronischer Ausweis" der Vorrichtung oder zur Diagnose auftretender Fehlfunktionen der Vorrichtung dienen. Auch ein Endnutzer der Vorrichtung kann von den gespeicherten Daten profitieren, z.B. in dem erforderliche Updates nicht manuell herausgesucht werden müssen, sondern automatisch auf Grundlage des individuellen Datensatzes vorgenommen werden können.

Der individuelle Datensatz kann- direkt oder indirekt - über die Datenschnittstelle der optoelektronischen Vorrichtung aus dem nicht-flüchtigen Speicher der Speichereinrichtung der Vorrichtung zumindest teilweise ausgelesen werden. Der individuelle Datensatz kann insbesondere von einer Firmware zum zuverlässigen und präzisen Betreiben der (individuellen) Vorrichtung ausgelesen werden.

Die Erfindung bezieht sich ferner auf ein Verfahren zum Betreiben einer optoelektronischen Sensorvorrichtung gemäß einer der oben beschriebenen Ausführungsvarianten, wobei der individuelle Datensatz der optoelektronischen Sensorvorrichtung über die Datenschnittstelle der optoelektronische Vorrichtung aus dem nicht-flüchtigen Speicher der Speichereinrichtung zumindest teilweise ausgelesen wird, und wobei die optoelektronische Vorrichtung in Abhängigkeit des ausgelesenen individuellen Datensatzes betrieben wird.

Der ausgelesene individuelle Datensatz kann wenigstens eine Übertragungsfunktion umfassen, die einen Zusammenhang zwischen wenigstens einem ersten Betriebsparameter und wenigstens einem zweiten Betriebsparameter beschreibt, wobei die Übertragungsfunktion sich vorzugsweise auf eine vorbestimmte Anwendung der optoelektronischen Vorrichtung als Sensor bezieht.

Nach einer Ausführungsform des Verfahrens wird der ausgelesene individuelle Datensatz auf ein Aktualisierungserfordernis hin überprüft. Sofern ein Aktualisierungserfordernis des in dem nicht-flüchtigen Speicher der Speichereinrichtung gespeicherten individuellen Datensatzes festgestellt wird, wird dieser entsprechend über die Datenschnittstelle der optoelektronischen Vorrichtung aktualisiert.

Die Erfindung wird nachfolgend lediglich beispielhaft mit Bezugnahme auf die Zeichnungen beschrieben, in denen:
- Fig. 1: eine Explosionsdarstellung einer optoelektronischen Vorrichtung ist;
- Fig. 2: eine Darstellung der Vorrichtung von Fig. 1 in einem zusammengesetzten Zustand ist;
- Fig. 3: ein schematisches Diagramm einer elektronischen Schaltung einer optoelektronischen Vorrichtung ist;
- Fig. 4: eine Übertragungsfunktion einer optoelektronischen Vorrichtung zeigt;
- Fig. 5: die Übertragungsfunktion von Fig. 4 und eine weitere Übertragungsfunktion einer optoelektronischen Vorrichtung zeigt;
- Fig. 6: zwei weitere Übertragungsfunktionen einer optoelektronischen Vorrichtung zeigt;
- Fig. 7: drei weitere Übertragungsfunktionen einer optoelektronischen Vorrichtung zeigt.

In den Zeichnungen sind gleiche oder gleichartige Elemente mit den gleichen Bezugszeichen gekennzeichnet.

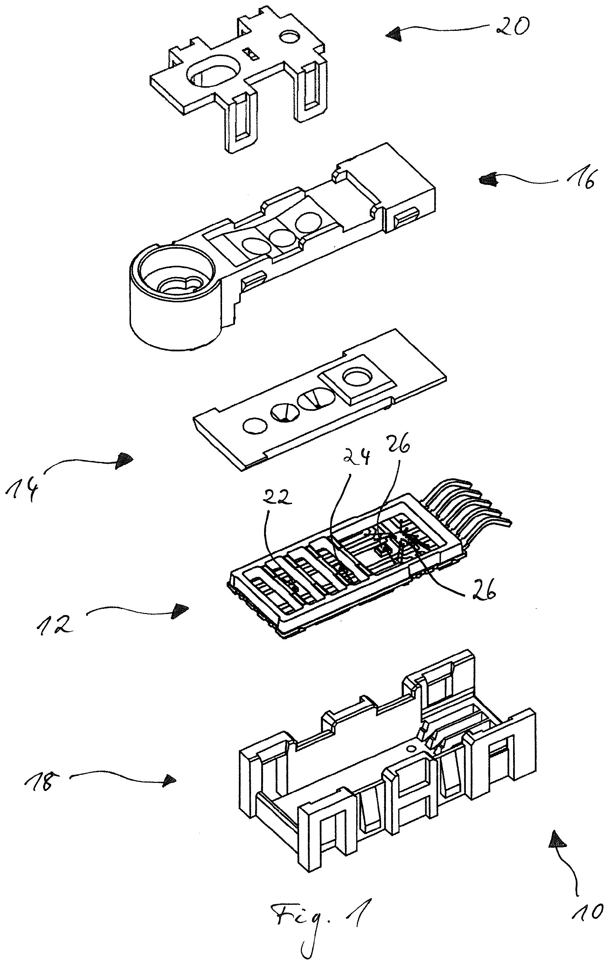

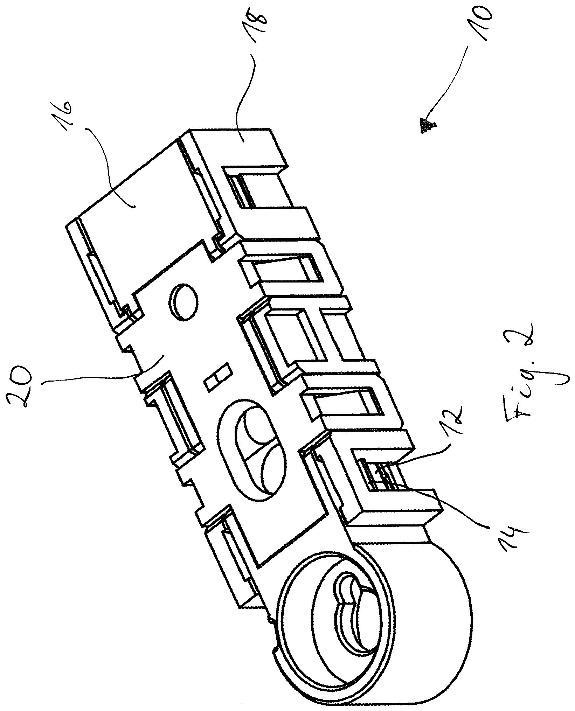

Eine optoelektronische Vorrichtung 10 umfasst eine Trägereinrichtung 12, ein Aperturelement 14, ein Linsenelement 16 sowie eine ein Unterteil 18 sowie ein Oberteil 20 umfassende Halteeinrichtung. Sämtliche dieser Komponenten sind in Fig. 1 von schräg oben gezeigt, d.h. die Perspektive ist schräg auf eine jeweilige Oberseite der Komponenten gerichtet. Die Komponenten 12, 14, 16, 18 und 20 werden in einer Sandwichanordnung zusammengesetzt, sodass sich der in Fig. 2 gezeigte Zustand der Vorrichtung 10 ergibt.

Auf der Trägereinrichtung 12 sind beispielsweise ein optoelektronischer Sender 22 sowie zwei optoelektronische Empfänger 24 installiert. Ferner ist auf der Trägereinrichtung 12 eine anwendungsspezifische integrierte Schaltung (ASIC) 26 installiert.

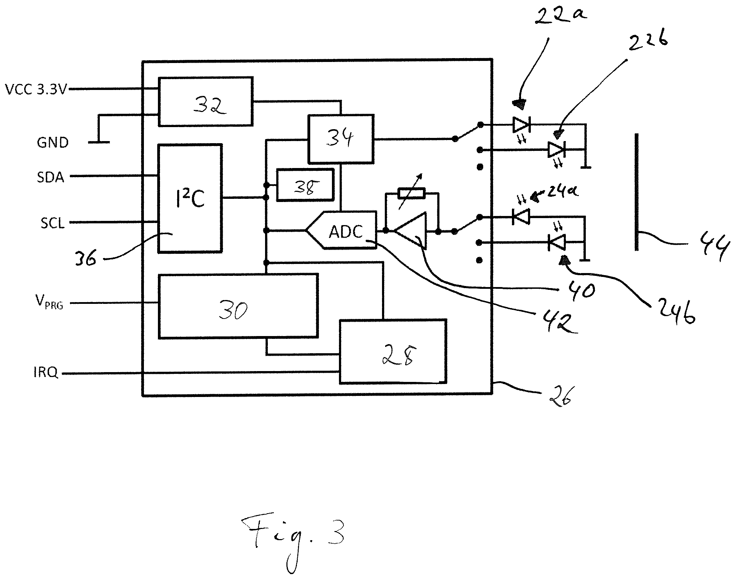

In Fig. 3 ist ein vereinfachtes Schaltungsdiagramm dargestellt, welches Details des ASICs 26 zeigt. Der ASIC 26 umfasst eine logische Recheneinheit 28 sowie eine Speichereinrichtung mit einem nicht-flüchtigen Speicher 30. Ferner umfasst der ASIC 26 eine Spannungsregelung 32, eine Stromquelle 34, ein Busmodul 36 (beispielsweise Inter-Integrated Circuit, I²C), einen Temperatursensor 38, einen Signalverstärker 40 sowie einen Analog-zu-Digital-Wandler 42. Das Busmodul 36 stellt eine Schnittstelle mit einer Geschwindigkeit von z.B. eine 1 Mbit pro Sekunde zur Verfügung. Die Stromquelle 34 ist vorzugsweise bidirektional ausgebildet und besitzt eine Auflösung von z.B. 10 Bit. Ferner kann die Stromquelle 34 bezüglich vier Ausgangsstrombereiche von +/- 25 mA bis zu +/- 200mA programmiert werden, sodass sich effektiv eine 12 Bit Stromquelle ergibt. Der Analog-zu-Digital-Wandler 42 kann bezüglich seiner Auflösung und Geschwindigkeit in Abhängigkeit von einer betreffenden Anwendung der Vorrichtung 10 wahlweise eingestellt werden. So kann in mehreren Einstellungsstufen zwischen einer schnellen Konvertierung mit geringer Auflösung (z.B. 10 µs und 6 Bit) und einer langsamen Konvertierung mit hoher Auflösung (z.B. 12.8 ms und 16 Bit) gewählt werden. Der ASIC 26 wird vorzugsweise mit Gleichstrom betrieben, sodass die betreffende Vorrichtung 10 insbesondere für Scananwendungen oder zeitkritische (schnelle) Anwendungen geeignet ist.

Der ASIC ist bei dem hier gezeigten Ausführungsbeispiel mit zwei als jeweilige Leuchtdiode ausgebildeten optoelektronischen Sendern 22a, 22b sowie mit zwei als jeweilige Photodiode ausgebildeten optoelektronischen Empfängern 24a, 24b verbunden. Abweichend zu der Trägereinrichtung 12 von Fig. 1 sind auf der dem ASIC 26 von Fig. 3 zugrundeliegenden Trägereinrichtung 12 somit je zwei Sender 22 und Empfänger 24 installiert. Die Sender 22 und Empfänger 24 können bezüglich eines jeweiligen Verstärkungsfaktors wahlweise eingestellt werden.

Die Spannungsregelung 32 ist mit eine Gleichspannungsquelle ("VCC 3.3V") und mit Masse ("GND") verbunden. Das Busmodul 36 ist mit einer Datenleitung ("SDA") und einer Taktleitung ("SCL") verbunden. Das Busmodul 36 dient als Datenschnittstelle der Vorrichtung 10, sodass die Vorrichtung 10 z.B. mit einem externen Microcontroller (nicht gezeigt) kommunizieren kann. Über die durch das Busmodul 36 gebildete Schnittstelle können Ausgabesignale der optoelektronischen Vorrichtung 10 (in Abhängigkeit von Empfangssignalen der optoelektronischen Empfänger 24a, 24b) ausgegeben werden. Ferner kann über diese Schnittstelle von außen auf den nicht-flüchtigen Speicher 30 zugegriffen werden. Der nicht-flüchtige Speicher 30 ermöglicht über einen separaten Spannungseingang ("V_{PRG}") eine zusätzliche Programmierfunktion. Ferner ist die logische Einheit 28 mit einer Leitung zum Übertragen einer sogenannten Unterbrechungsanforderung ("IRQ"), insbesondere an den genannten Microcontroller, verbunden.

In dem nicht-flüchtigen Speicher 30 des ASIC 26 ist ein individueller Datensatz gespeichert, welcher wenigstens eine Übertragungsfunktion der optoelektronischen Vorrichtung 10 umfasst, wobei der indivduelle Datensatz sich auf die konkrete optoelektronische Vorrichtung 10 bezieht, die den Speicher 30 mit dem individuellen Datensatz trägt. Eine Übertragungsfunktion des individuellen Datensatzes kann eine Detektion eines Objekts 44 (z.B. eines Papierbogens) mittels des optoelektronischen Senders 22a und des optoelektronischen Empfängers 24a charakterisieren. Eine weitere Übertragungsfunktion des individuellen Datensatzes kann eine Detektion eines weiteren Objekts (nicht gezeigt) mittels des optoelektronischen Senders 22b und des optoelektronischen Empfängers 24b charakterisieren. Der individuelle Datensatz ist aus dem Speicher 30 ganz oder teilweise (z.B. lediglich eine der Übertragungsfunktionen) auslesbar, sodass die optoelektronische Vorrichtung 10 unter Berücksichtigung des individuellen Datensatzes gemäß einer einheitlichen Spezifikation als Sensor zuverlässig betrieben werden kann.

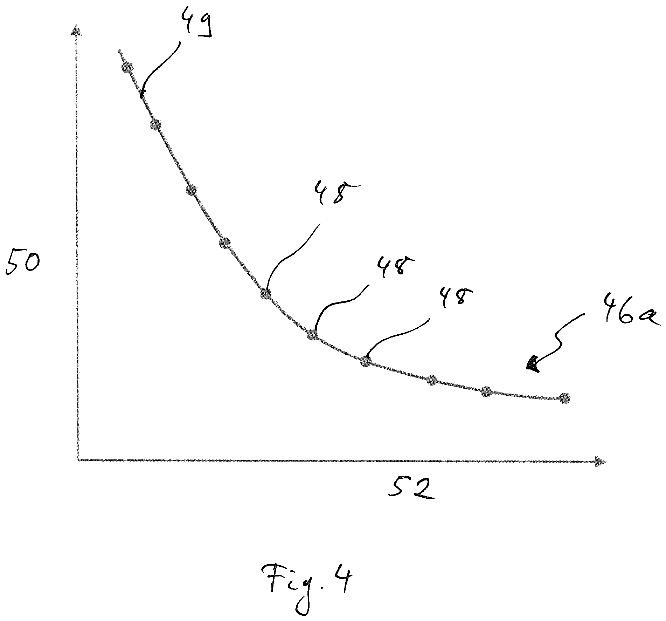

In Fig. 4 ist ein Ausschnitt einer Übertragungsfunktion 46a gezeigt, welche mehrere Funktionswerte 48 umfasst. Die Übertragungsfunktion 46a kann ausschließlich wenige Funktionswerte 48 (wie gezeigt) oder eine größere Anzahl an Funktionswerten 48 umfassen, die auf der dargestellten interpolierten Kurve 49 liegen und aufgrund der mehreren Funktionswerte 48 z.B. mittels Interpolation gewonnen werden können. Die Übertragungsfunktion 46a kann auch eine vollständige mathematische Beschreibung der Kurve 49 umfassen. Die Übertragungsfunktion 46a beschreibt einen Zusammenhang zwischen einer relativen Intensität 50 ("Y-Achse") eines von einem optoelektronischen Empfänger 24 empfangenen optischen Signals zu dem Abstand 52 ("X-Achse") eines Objekts 44, von dem das optische Signal reflektiert worden ist. Hierbei stellt die relative Intensität 50 einen ersten Betriebsparameter und die Objektdistanz 52 einen zweiten Betriebsparameter der Vorrichtung 10 dar.

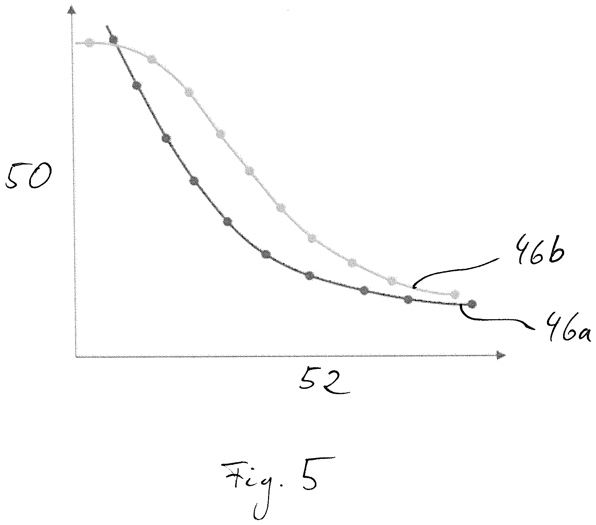

Fig. 5 zeigt die Übertragungsfunktion 46a von Fig. 1 und eine weitere Übertragungsfunktion 46b, die sich von der Übertragungsfunktion 46a unterscheidet. Die Übertragungsfunktion 46b bezieht sich auf die im Wesentlichen gleiche Sensoranwendung wie die Übertragungsfunktion 46a, jedoch mit einem geringfügig unterschiedlichen Objekt (nicht gezeigt) und innerhalb eines geringfügig unterschiedlichen Bereichs von Objektdistanzen. Je nach vorgesehener Anwendung der Vorrichtung 10, kann die Vorrichtung 10 auf Basis einer der beiden Übertragungsfunktionen 46a, 46b gemäß einer zugrundeliegenden Spezifikation der Vorrichtung 10 betrieben werden.

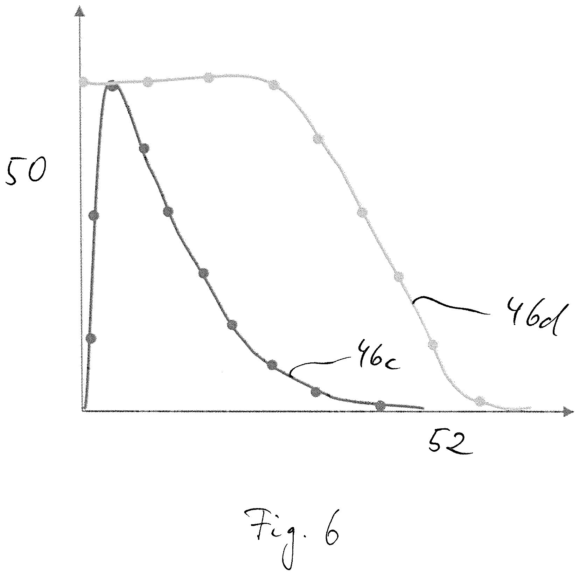

Fig. 6 zeigt zwei weitere Übertragungsfunktionen 46c und 46d für eine weitere Sensoranwendung der Vorrichtung 10. Die Übertragungsfunktionen 46c, 46d unterschieden sich erheblich voneinander, sodass die Vorrichtung 10 unter Berücksichtigung der Übertragungsfunktionen 46c, 46d sehr unterschiedlich betrieben werden kann. Betriebsparameter, wie etwa ein anzuwendender Verstärkungsfaktor für ein von dem optoelektronischen Empfänger 24 empfangenes Signal, können in Abhängigkeit der jeweils ausgewählten Übertragungsfunktion 46c, 46d einfach eingestellt werden, sodass die anwendungs- und vorrichtungsspezifischen Unterschiede ausgeglichen werden können.

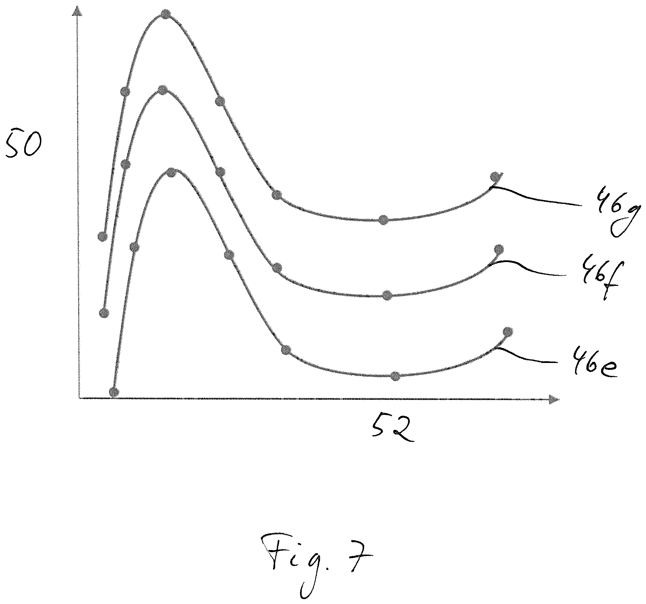

In Fig. 7 sind drei weitere Übertragungsfunktionen 46e, 46f und 46g dargestellt, wobei sich die Übertragungsfunktionen 46e, 46f und 46g jeweils auf die Detektion unterschiedlicher Objekte 44 beziehen. Da die Übertragungsfunktionen 46e, 46f und 46g sich jeweils lediglich in einem jeweiligen Offset der relativen Intensität 50 voneinander unterschieden, ist es vorteilhaft, lediglich eine der Übertragungsfunktion 46e, 46f, 46g sowie eine Berechnungsvorschrift zur Bestimmung der anderen Übertragungsfunktionen 46e, 46f, 46g in dem Speicher 30 der Vorrichtung 10 abzuspeichern. Im Bedarfsfall kann in Abhängigkeit eines betreffenden Objekts 44 die zugehörige Übertragungsfunktion 46e, 46f oder 46g einfach und effizient bestimmt werden. Dies kann insbesondere mittels einer in dem Speicher 30 gespeicherten Lookup Tabelle erfolgen. Alternativ können auch Polynomfunktionen zur Beschreibung einer oder mehrerer Übertragungsfunktionen 46e, 46f, 46g eingesetzt werden.

Es versteht sich, dass in dem Speicher 30 noch weitere individuelle Daten der optoelektronischen Vorrichtung 10, insbesondere die vorstehend allgemein beschriebenen Arten von Daten, gespeichert sein können, beispielsweise betreffend Informationen zu der Produktionshistorie der jeweiligen Vorrichtung 10. Somit kann der individuelle Datensatz einen umfassenden "elektronischen Ausweis" der Vorrichtung 10 bereitstellen, durch den die Vorrichtung 10 auch im Falle von signifikanten Herstellungstoleranzen oder in stark unterschiedlichen Anwendungsfällen zuverlässig und präzise betrieben werden kann. Sollten im Einzelfall dennoch Fehlfunktionen auftreten, so können diese mit Hilfe des individuellen Datensatzes diagnostiziert und gegebenenfalls durch ein individuelles Update der Vorrichtung 10 einfach behoben werden.

### Bezugszeichenliste

- 10: optoelektronische Vorrichtung
- 12: Trägereinrichtung
- 14: Aperturelement
- 16: Linsenelement
- 18: Unterteil
- 20: Oberteil
- 22: optoelektronischer Sender
- 24: optoelektronischer Empfänger
- 26: anwendungsspezifische integrierte Schaltung
- 28: logische Recheneinheit
- 30: nicht-flüchtiger Speicher
- 32: Spannungsregelung
- 34: Stromquelle
- 36: Busmodul
- 38: Temperatursensor
- 40: Signalverstärker
- 42: Analog-zu-Digital-Wandler
- 44: Objekt
- 46: Übertragungsfunktion
- 48: Funktionswert
- 49: Kurve
- 50: relative Intensität
- 52: Objektdistanz

## Patentansprüche

1. Optoelektronische Sensorvorrichtung (10), mit:
wenigstens einem optoelektronischen Sender (22) und wenigstens einem optoelektronischen Empfänger (24),
einer Speichereinrichtung mit wenigstens einem nicht-flüchtigen Speicher (30), der dazu angepasst ist, einen individuellen Datensatz zu speichern, und
einer Datenschnittstelle (36), die einen Zugriff auf den nicht-flüchtigen Speicher (30) ermöglicht,
wobei die optoelektronische Sensorvorrichtung (10) eine anwendungsspezifische integrierte Schaltung (26) aufweist, wobei die Speichereinrichtung mit der anwendungsspezifischen integrierten Schaltung (26) verbunden oder in die anwendungsspezifische integrierte Schaltung (26) integriert ist,
wobei die anwendungsspezifische integrierte Schaltung (26) dazu angepasst ist, Empfangssignale des optoelektronischen Empfängers (24) zu verarbeiten und auszugeben,
**dadurch gekennzeichnet, dass**
der individuelle Datensatz eine spektrale Empfindlichkeitscharakteristik der optoelektronischen Sensorvorrichtung (10), eine entfernungsabhängige Empfindlichkeitscharakteristik der optoelektronischen Sensorvorrichtung (10) und/oder eine winkelabhängige Empfindlichkeitscharakteristik der optoelektronischen Sensorvorrichtung (10) repräsentiert, wobei die anwendungsspezifische integrierte Schaltung (26) ferner dazu angepasst ist, den individuellen Datensatz oder Teile hiervon aus dem nicht-flüchtigen Speieher (30) auszulesen und auszugeben, wobei die anwendungsspezifische integrierte Schaltung (26) jedoch nicht geeignet ist, die Empfangssignale des optoelektronischen Empfängers (24) in Abhängigkeit von dem individuellen Datensatz zu verarbeiten.

2. Optoelektronische Sensorvorrichtung (10) nach Anspruch 1,
wobei der individuelle Datensatz eine Vielzahl von individuellen Daten umfasst.

3. Optoelektronische Sensorvorrichtung (10) nach Anspruch 1 oder 2,
wobei der individuelle Datensatz Identifizierungsdaten zu einer Produktionshistorie der optoelektronischen Sensorvorrichtung (10) umfasst, wobei die Identifizierungsdaten wenigstens eine Teilenummer, wenigstens eine Chargennummer und/oder wenigstens eine Information über einen Produktionszeitpunkt umfassen.

4. Optoelektronische Sensorvorrichtung (10) nach zumindest einem der vorhergehenden Ansprüche,
wobei der individuelle Datensatz Produktionsprozessdaten zu einer Produktionshistorie der optoelektronischen Sensorvorrichtung umfasst, wobei die Produktionsprozessdaten wenigstens eine Information über ein bei der Herstellung verwendetes Werkzeug, wenigstens eine Information über eine bei der Herstellung verwendete Prüfeinrichtung und/oder wenigstens eine Information über eine bei der Herstellung verwendete Prüf-Software umfasst.

5. Optoelektronische Sensorvorrichtung (10) nach zumindest einem der vorhergehenden Ansprüche,
wobei der individuelle Datensatz wenigstens eine Übertragungsfunktion (46) umfasst, wobei die Übertragungsfunktion (46) einen Zusammenhang zwischen wenigstens einem ersten Betriebsparameter und wenigstens einem zweiten Betriebsparameter der optoelektronischen Sensorvorrichtung (10) beschreibt.

6. Optoelektronische Sensorvorrichtung (10) nach Anspruch 5,
wobei der erste Betriebsparameter einem Verhältnis eines Empfangssignals des optoelektronischen Empfängers (24) zu einem Emissionssignal des optoelektronischen Senders (22) entspricht.

7. Optoelektronische Sensorvorrichtung (10) nach Anspruch 5 oder 6,
wobei der individuelle Datensatz zur Beschreibung der wenigstens einen Übertragungsfunktion (46) eine Lookup Tabelle und/oder Polynomparameter zur Charakterisierung einer Polynomfunktion aufweist.

8. Optoelektronische Sensorvorrichtung (10) nach zumindest einem der vorhergehenden Ansprüche,
wobei die optoelektronische Sensorvorrichtung (10) einen Temperatursensor (38) umfasst.

9. Verfahren zum Herstellen einer optoelektronischen Sensorvorrichtung (10) gemäß einem der Ansprüche 1 bis 8,
wobei eine spektrale Empfindlichkeitscharakteristik, eine entfernungsabhängige Empfindlichkeitscharakteristik und/oder eine winkelabhängige Empfindlichkeitscharakteristik der optoelektronischen Sensorvorrichtung (10) ermittelt wird, und
wobei ein individueller Datensatz in den nicht-flüchtigen Speicher (30) der Speichereinrichtung geschrieben wird, der die ermittelte Empfindlichkeitscharakteristik repräsentiert.

10. Verfahren nach Anspruch 9,
wobei die optoelektronische Sensorvorrichtung (10) gemäß einem Produktionsprozess hergestellt und geprüft wird, und
wobei in Abhängigkeit von dem Produktionsprozess ein individueller Datensatz in den nicht-flüchtigen Speicher (30) der Speichereinrichtung geschrieben wird, der wenigstens eine Information über ein bei der Herstellung verwendetes Werkzeug, wenigstens eine Information über eine bei der Herstellung verwendete Prüfeinrichtung und/oder wenigstens eine Information über eine bei der Herstellung verwendete Prüf-Software umfasst.

11. Verfahren zum Betreiben einer optoelektronischen Sensorvorrichtung (10) gemäß einem der Ansprüche 1 bis 8,
wobei der individuelle Datensatz über die Datenschnittstelle (36) der optoelektronischen Sensorvorrichtung (10) aus dem nicht-flüchtigen Speicher (30) der Speichereinrichtung der optoelektronischen Sensorvorrichtung (10) zumindest teilweise ausgelesen wird,
wobei die optoelektronische Sensorvorrichtung (10) in Abhängigkeit des ausgelesenen individuellen Datensatzes betrieben wird.

12. Verfahren nach Anspruch 11,
wobei der ausgelesene individuelle Datensatz wenigstens eine Übertragungsfunktion (46) umfasst, wobei die Übertragungsfunktion (46) einen Zusammenhang zwischen wenigstens einem ersten Betriebsparameter und wenigstens einem zweiten Betriebsparameter der optoelektronischen Sensorvorrichtung (10) beschreibt, und wobei die Übertragungsfunktion (46) sich auf eine vorbestimmte Anwendung der optoelektronischen Sensorvorrichtung (10) als Sensor bezieht.

13. Verfahren nach Anspruch 11 oder 12,
wobei der ausgelesene individuelle Datensatz auf ein Aktualisierungserfordernis hin überprüft wird, wobei der in dem nicht-flüchtigen Speicher (30) der Speichereinrichtung gespeicherte individuelle Datensatz über die Datenschnittstelle (36) der optoelektronischen Sensorvorrichtung (10) in Abhängigkeit eines festgestellten Aktualisierungserfordernisses aktualisiert wird.

## Claims

1. An optoelectronic sensor apparatus (10), comprising:
at least one optoelectronic transmitter (22) and at least one optoelectronic receiver (24);
a memory device having at least one non-volatile memory (30) which is adapted to store an individual data set; and
a data interface (36) which enables access to the non-volatile memory (30), wherein the optoelectronic sensor apparatus (10) has an application-specific integrated circuit (26), with the memory device being connected to the application-specific integrated circuit (26) or being integrated into the application-specific integrated circuit (26); and
wherein the application-specific integrated circuit (26) is adapted to process and output received signals of the optoelectronic receiver (24),
**characterized in that**
the individual data set represents a spectral sensitivity characteristic of the optoelectronic sensor apparatus (10), a distance-dependent sensitivity characteristic of the optoelectronic sensor apparatus (10) and/or an angle-dependent sensitivity characteristic of the optoelectronic sensor apparatus (10), with the application-specific integrated circuit (26) further being adapted to read and to output the individual data set or parts thereof from the non-volatile memory (30), but with the application-specific integrated circuit (26) not being suitable to process the received signals of the optoelectronic receiver (24) in dependence on the individual data set.

2. An optoelectronic sensor apparatus (10) in accordance with claim 1,
wherein the individual data set comprises a plurality of individual pieces of data.

3. An optoelectronic sensor apparatus (10) in accordance with claim 1 or claim 2,
wherein the individual data set comprises identification data with respect to a production history of the optoelectronic sensor apparatus (10), with the identification data comprising at least one part number; at least one batch number; and/or at least one piece of information about a production time.

4. An optoelectronic sensor apparatus (10) in accordance with at least one of the preceding claims,
wherein the individual data set comprises production process data with respect to a production history of the optoelectronic sensor apparatus, with the production process data comprising at least one piece of information about a tool used in the manufacture; at least one piece of information about a testing device used in the manufacture; and/or at least one piece of information about a piece of testing software used in the manufacture.

5. An optoelectronic sensor apparatus (10) in accordance with at least one of the preceding claims,
wherein the individual data set comprises at least one transfer function (46), with the transfer function (46) describing a relationship between at least a first operating parameter and at least a second operating parameter of the optoelectronic sensor apparatus (10).

6. An optoelectronic sensor apparatus (10) in accordance with claim 5,
wherein the first operating parameter corresponds to a ratio of a received signal of the optoelectronic receiver (24) to an emitted signal of the optoelectronic transmitter (22).

7. An optoelectronic sensor apparatus (10) in accordance with claim 5 or claim 6,
wherein the individual data set has a look-up table for describing the at least one transfer function (46) and/or has polynomial parameters for characterizing a polynomial function.

8. An optoelectronic sensor apparatus (10) in accordance with at least one of the preceding claims,
wherein the optoelectronic sensor apparatus (10) comprises a temperature sensor (38).

9. A method of manufacturing an optoelectronic sensor apparatus (10) in accordance with any one of the claims 1 to 8,
wherein a spectral sensitivity characteristic, a distance-dependent sensitivity characteristic and/or an angle-dependent sensitivity characteristic of the optoelectronic sensor apparatus (10) is/are determined; and
wherein an individual data set is written into the non-volatile memory (30) of the memory device which represents the sensitivity characteristic determined.

10. A method in accordance with claim 9,
wherein the optoelectronic sensor apparatus (10) is manufactured and tested in accordance with a production process; and
wherein an individual data set is written into the non-volatile memory (30) of the memory device in dependence on the production process, which data set comprises at least one piece of information about a tool used in the manufacture; at least one piece of information about a testing device used in the manufacture; and/or at least one piece of information about a piece of testing software used in the manufacture.

11. A method of operating an optoelectronic sensor apparatus (10) in accordance with any one of the claims 1 to 8,
wherein the individual data set is at least partly read via the data interface (36) of the optoelectronic sensor apparatus (10) from the non-volatile memory (30) of the memory device of the optoelectronic sensor apparatus (10); and
wherein the optoelectronic sensor apparatus (10) is operated in dependence on the read individual data set.

12. A method in accordance with claim 11,
wherein the read individual data set comprises at least one transfer function (46); wherein the transfer function (46) describes a relationship between at least a first operating parameter and at least a second operating parameter of the optoelectronic sensor apparatus (10); and wherein the transfer function (46) relates to a predetermined application of the optoelectronic sensor apparatus (10) as a sensor.

13. A method in accordance with claim 11 or claim 12,
wherein the read individual data set is checked for an update requirement, with the individual data set stored in the non-volatile memory (30) of the memory device being updated via the data interface (36) of the optoelectronic sensor apparatus (10) in dependence on a determined update requirement.

## Revendications

1. Dispositif capteur optoélectronique (10) comportant :
au moins un émetteur optoélectronique (22) et au moins un récepteur optoélectronique (24),
un moyen de stockage ayant au moins une mémoire non volatile (30) qui est adaptée pour stocker un ensemble de données individuel, et
une interface de données (36) permettant l'accès à la mémoire non volatile (30),
dans lequel
le dispositif capteur optoélectronique (10) comprend un circuit intégré (26) spécifique à une application, le moyen de stockage étant connecté au circuit intégré (26) spécifique à l'application ou étant intégré au circuit intégré (26) spécifique à l'application,
le circuit intégré (26) spécifique à l'application est adapté pour traiter et émettre des signaux de réception du récepteur optoélectronique (24),
**caractérisé en ce que**
l'ensemble de données individuel représente une caractéristique de sensibilité spectrale du dispositif capteur optoélectronique (10), une caractéristique de sensibilité, dépendante de la distance, du dispositif capteur optoélectronique (10) et/ou une caractéristique de sensibilité, dépendante de l'angle, du dispositif capteur optoélectronique (10), le circuit intégré (26) spécifique à l'application étant en outre adapté pour lire et émettre l'ensemble de données individuel ou des parties de celui-ci de la mémoire non volatile (30), le circuit intégré (26) spécifique à l'application n'étant cependant pas apte à traiter les signaux de réception du récepteur optoélectronique (24) en fonction de l'ensemble de données individuel.

2. Dispositif capteur optoélectronique (10) selon la revendication 1,
dans lequel
l'ensemble de données individuel comprend une multitude de données individuelles.

3. Dispositif capteur optoélectronique (10) selon la revendication 1 ou 2,
dans lequel
l'ensemble de données individuel comprend des données d'identification relatives à un historique de production du dispositif capteur optoélectronique (10),
les données d'identification comprennent au moins un numéro de pièce, au moins un numéro de lot et/ou au moins une information relative à un instant de production.

4. Dispositif capteur optoélectronique (10) selon l'une au moins des revendications précédentes,
dans lequel
l'ensemble de données individuel comprend des données de processus de production relatives à un historique de production du dispositif capteur optoélectronique, les données de processus de production comprenant au moins une information relative à un outil utilisé lors de la fabrication, au moins une information relative à un moyen d'inspection utilisé lors de la fabrication et/ou au moins une information relative à un logiciel d'inspection utilisé lors de la fabrication.

5. Dispositif capteur optoélectronique (10) selon l'une au moins des revendications précédentes,
dans lequel
l'ensemble de données individuel comprend au moins une fonction de transfert (46), la fonction de transfert (46) décrivant une relation entre au moins un premier paramètre de fonctionnement et au moins un second paramètre de fonctionnement du dispositif capteur optoélectronique (10).

6. Dispositif capteur optoélectronique (10) selon la revendication 5,
dans lequel
le premier paramètre de fonctionnement correspond à un rapport entre un signal de réception du récepteur optoélectronique (24) et un signal d'émission de l'émetteur optoélectronique (22).

7. Dispositif capteur optoélectronique (10) selon la revendication 5 ou 6,
dans lequel
l'ensemble de données individuel pour décrire au moins une fonction de transfert (46) comprend un tableau de correspondance et/ou des paramètres polynomiaux pour caractériser une fonction polynomiale.

8. Dispositif capteur optoélectronique (10) selon l'une au moins des revendications précédentes,
dans lequel
le dispositif capteur optoélectronique (10) comprend un capteur de température (38).

9. Procédé de réalisation d'un dispositif capteur optoélectronique (10) selon l'une des revendications 1 à 8,
dans lequel
on détermine une caractéristique de sensibilité spectrale, une caractéristique de sensibilité dépendante de la distance et/ou une caractéristique de sensibilité dépendante de l'angle du dispositif capteur optoélectronique (10),
et
on écrit un ensemble de données individuel dans la mémoire non volatile (30) du moyen de stockage, qui représente la caractéristique de sensibilité déterminée.

10. Procédé selon la revendication 9,
dans lequel
le dispositif capteur optoélectronique (10) est réalisé et inspecté selon un processus de production, et
en fonction du processus de production, un ensemble de donnés individuel est écrit dans la mémoire non volatile (30) du moyen de stockage, qui comprend au moins une information relative à un outil utilisé lors de la fabrication, au moins une information relative à un moyen d'inspection utilisé lors de la fabrication et/ou au moins une information relative à un logiciel d'inspection utilisé lors de la fabrication.

11. Procédé pour faire fonctionner un dispositif capteur optoélectronique (10) selon l'une des revendications 1 à 8,
dans lequel
l'ensemble de données individuel est lu au moins partiellement de la mémoire non volatile (30) du moyen de stockage du dispositif capteur optoélectronique (10) via l'interface de données (36) du dispositif capteur optoélectronique (10),
le dispositif capteur optoélectronique (10) fonctionne en fonction de l'ensemble de données individuel lu.

12. Procédé selon la revendication 11,
dans lequel
l'ensemble de données individuel lu comprend au moins une fonction de transfert (46), la fonction de transfert (46) décrivant une relation entre au moins un premier paramètre de fonctionnement et au moins un second paramètre de fonctionnement du dispositif capteur optoélectronique (10), la fonction de transfert (46) se rapportant à une application prédéterminée du dispositif capteur optoélectronique (10) à titre de capteur.

13. Procédé selon la revendication 11 ou 12,
dans lequel
l'ensemble de données individuel lu est vérifié vis-à-vis d'une exigence de mise à jour, l'ensemble de données individuel stocké dans la mémoire non volatile (30) du moyen de stockage étant mis à jour via l'interface de données (36) du dispositif capteur optoélectronique (10) en fonction d'une exigence de mise à jour constatée.
